# FASCICULE DE BREVET EUROPEEN

(11) **EP 2 979 927 B1**
(45) Date de publication et mention de la délivrance du brevet: **03.05.2017**
(21) Numéro de dépôt: 15178717.3
(22) Date de dépôt: 28.07.2015
(51) Int. Cl.: B60R 5/04

(54) **SYSTÈME DE RECOUVREMENT D'UN COMPARTIMENT À BAGAGES DE VÉHICULE AUTOMOBILE**
ABDECKSYSTEM EINES KOFFERRAUMFACHS EINES KRAFTFAHRZEUGS
SYSTEM FOR COVERING A LUGGAGE COMPARTMENT OF A MOTOR VEHICLE

(30) Priorité: 28.07.2014 FR 1457303
(43) Date de publication de la demande: 03.02.2016
(73) Titulaire: Cera APS, 51100 Reims (FR)
(72) Inventeur: LECOMTE, Alicia, 51220 Villers-Franqueux (FR); GUENAMANT, Nicolas, 08310 Machault (FR)
(74) Mandataire: Sayettat, Julien Christian

(56) Documents cités:
- EP-A1- 2 095 997
- JP-A- H08 303 510

## Description

L'invention concerne un système de recouvrement d'un compartiment à bagages de véhicule automobile.

Il est connu de réaliser un système de recouvrement d'un compartiment à bagages de véhicule automobile, ledit système comprenant :
- un panneau avant destiné à être monté en position horizontale sur des ébénisteries latérales de garnissage dudit compartiment,
- un panneau arrière articulé transversalement par une charnière audit panneau avant, de manière à pouvoir être actionné entre une position de recouvrement où il est dans le prolongement horizontal dudit panneau avant, et une position d'accès audit compartiment, où il est rabattu par le haut d'un demi-tour contre ledit panneau avant,
ladite charnière comprenant :
- une plaque avant solidaire dudit panneau avant,
- une plaque arrière solidaire dudit panneau arrière,
- une entretoise montée entre lesdites plaques, le bord avant - respectivement arrière - de ladite entretoise étant articulé selon un axe transversal avant - respectivement arrière - à ladite plaque avant - respectivement arrière -,
- au moins un moyen ressort actionnant lesdites plaques en rabattement l'une vers à l'autre, de manière à permettre l'actionnement de ladite charnière entre une configuration dépliée, où lesdites plaques et ladite entretoise sont dans le prolongement horizontal les unes des autres, et une configuration repliée où lesdites plaques et ladite entretoise définissent en vue latérale un U couché.

Afin de maintenir le panneau arrière en position de recouvrement, il est connu d'utiliser un moyen de verrouillage réversible dans ladite position.

Le moyen de verrouillage comprend par exemple des doigts transversaux latéraux saillant à l'arrière du panneau arrière, lesdits doigts étant destinés à coopérer avec les logements prévus sur les ébénisteries pour assurer le verrouillage attendu.

Le déverrouillage peut se faire par une rétraction des doigts leur permettant de s'extraire des logements afin de permettre, sous l'action du moyen ressort, le rabattement du panneau arrière en position d'accès au compartiment.

Par ailleurs, l'utilisation d'une charnière à deux axes est dictée par le fait que l'on doive disposer d'une charnière invisible, donc associée en face d'envers des panneaux, qui permette un rabattement du panneau arrière par le haut.

Avec un tel agencement, il est courant d'observer que le panneau arrière en fin de rabattement vienne percuter le panneau avant en s'accompagnant d'un bruit de claquage désagréable pour l'utilisateur. Le document EP 2 095 997 A1 décrit un système de recouvrement d'un compartiment à bagages de véhicule automobile conforme au préambule de la revendication 1. L'invention a pour but d'améliorer le fonctionnement du système de recouvrement connu. A cet effet, l'invention propose un système de recouvrement d'un compartiment à bagages de véhicule automobile, ledit système comprenant :
- un panneau avant fixe,
- un panneau arrière articulé transversalement par une charnière audit panneau avant, de manière à pouvoir être actionné entre une position de recouvrement, où il est dans le prolongement horizontal dudit panneau avant, et une position d'accès audit compartiment, où il est rabattu contre ledit panneau avant,
ladite charnière comprenant :
- une plaque avant solidaire dudit panneau avant,
- une plaque arrière solidaire dudit panneau arrière,
- une entretoise montée entre lesdites plaques, le bord avant - respectivement arrière - de ladite entretoise étant articulé selon un axe transversal avant - respectivement arrière - à ladite plaque avant - respectivement arrière -,
- au moins un moyen ressort actionnant lesdites plaques en rabattement l'une vers à l'autre, de manière à permettre l'actionnement de ladite charnière entre une configuration dépliée, où lesdites plaques et ladite entretoise sont dans le prolongement horizontal les unes des autres, et une configuration repliée où lesdites plaques et ladite entretoise définissent en vue latérale un U couché,
ledit système comprenant en outre deux dispositifs de ralentissement de la rotation disposés respectivement selon chacun desdits axes, de manière à ralentir la rotation de ladite entretoise par rapport à ladite plaque avant et la rotation de ladite plaque arrière par rapport à ladite entretoise.

Dans cette description, les termes de positionnement dans l'espace (haut, longitudinal, transversal, latéral, avant, arrière, vertical, horizontal,...) sont pris en référence au système disposé dans le véhicule, le panneau arrière étant disposé en position de recouvrement.

Le terme « radialement » est pris en référence aux axes de rotation.

Avec l'agencement proposé, prévoyant l'utilisation d'un dispositif de ralentissement par axe, la vitesse de rabattement du panneau arrière est parfaitement maîtrisée et procure à l'utilisateur une perception optimale du fonctionnement du système.

On verra dans la suite de la description que cette vitesse de rabattement peut être différenciée, en prévoyant notamment une première phase de rabattement rapide, permettant un accès rapide au compartiment à bagages, suivie par une deuxième phase de rabattement ralenti, évitant un claquage du panneau arrière contre le panneau avant en fin de rabattement.

D'autres particularités et avantages de l'invention apparaîtront dans la description qui suit, faite en référence aux figures jointes, dans lesquelles :
- les figures 1 sont des vues schématiques en perspective d'un système où le panneau arrière est en position de recouvrement (1a) et en position d'accès (1b),
- la figure 2 est une vue en perspective éclatée d'une charnière selon un mode de réalisation,
- les figures 3 sont des coupes longitudinales verticales de la charnière de la figure 2 lorsque le panneau arrière est en position de recouvrement (3a), en début de rabattement (3b), dans une étape de rabattement plus accentué (3c) et en position d'accès (3d).

En référence aux figures, on décrit un système 1 de recouvrement d'un compartiment à bagages de véhicule automobile, ledit système comprenant :
- un panneau avant 2 destiné à être monté en position horizontale sur des ébénisteries latérales, non représentées, de garnissage dudit compartiment,
- un panneau arrière 3 articulé transversalement par une charnière 4 audit panneau avant, de manière à pouvoir être actionné entre une position de recouvrement où il est dans le prolongement horizontal dudit panneau avant, et une position d'accès audit compartiment, où il est rabattu par le haut d'un demi-tour contre ledit panneau avant,
ladite charnière comprenant :
- une plaque avant 5 solidaire dudit panneau avant,
- une plaque arrière 6 solidaire dudit panneau arrière,
- une entretoise 7 montée entre lesdites plaques, le bord avant - respectivement arrière - de ladite entretoise étant articulé selon un axe transversal avant 8 - respectivement arrière 9 - à ladite plaque avant - respectivement arrière -,
- au moins un moyen ressort 10 - en l'occurrence un seul dans la réalisation représentée - actionnant lesdites plaques en rabattement l'une vers à l'autre, de manière à permettre l'actionnement de ladite charnière entre une configuration dépliée, où lesdites plaques et ladite entretoise sont dans le prolongement horizontal les unes des autres, et une configuration repliée où lesdites plaques et ladite entretoise définissent en vue latérale un U couché - correspondant à une rotation de sensiblement un quart de tour de ladite entretoise et de ladite plaque arrière -,
ledit système comprenant en outre deux dispositifs de ralentissement 11a,11b de la rotation disposés respectivement selon chacun desdits axes, de manière à ralentir la rotation de ladite entretoise par rapport à ladite plaque avant et la rotation de ladite plaque arrière par rapport à ladite entretoise.

Selon la réalisation représentée, un dispositif de ralentissement 11a,11b - en l'occurrence les deux dans la réalisation représentée - est agencé pour réaliser un ralentissement sur seulement une partie de la plage angulaire totale de rotation.

Selon la réalisation représentée, un dispositif de ralentissement 11a,11b - en l'occurrence les deux dans la réalisation représentée - comprend un stator 12a,12b et un rotor 13a,13b entre lesquels est interposée une substance visqueuse de ralentissement de la rotation dudit rotor.

Selon la réalisation représentée, le stator 12a,12b est monté fixe sur l'entretoise 7, le rotor 13a,13b étant couplé en rotation avec une plaque 5,6.

Selon la réalisation représentée un rotor 13a,13b - ici les deux - comprend deux ailettes 14 externes radialement opposées, une plaque 5,6 étant pourvue d'un moyen de réception 15 comprenant deux logements 16 respectifs de réception de chacune desdites ailettes, chacun desdits logements étant délimité par deux parois 17a,17b définissant un secteur angulaire où lesdites ailettes peuvent se mouvoir librement, de manière à ne pas ralentir la rotation, lesdites parois étant positionnées de manière à entrer en contact avec lesdites ailettes à partir d'un angle de rotation donné entre l'entretoise 7 et une plaque 5,6, de manière à réaliser le couplage en rotation entre le rotor 13a,13b et la plaque 5,6 correspondante et à ralentir la rotation.

Selon la réalisation représentée, le moyen de réception 15 est sous forme d'une pièce - notamment métallique - emboitée sur la plaque 5,6 de manière à en être solidaire en rotation.

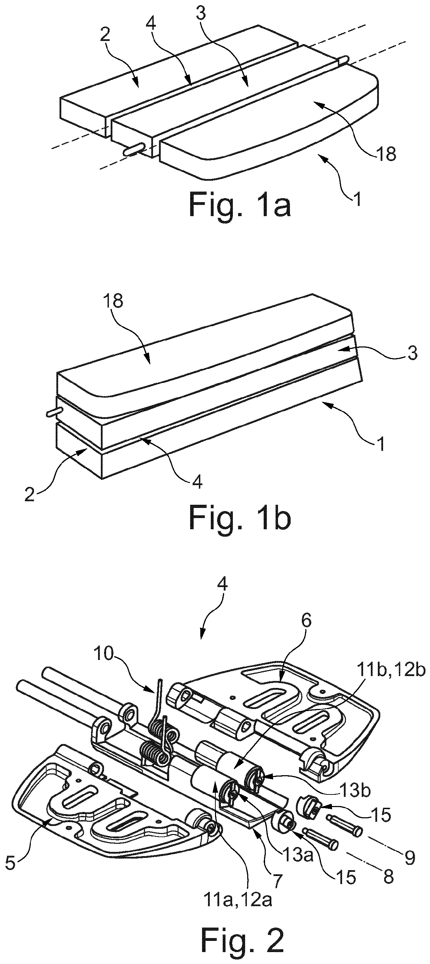

Selon la réalisation représentée en figures 1, le système 1 comprend en outre un volet arrière 18 articulé transversalement en arrière du panneau arrière 3 de manière à pouvoir se replier contre ledit panneau arrière une fois mis en position de recouvrement.

On décrit à présent différentes étapes de rabattement du panneau arrière 3 selon la réalisation représentée.

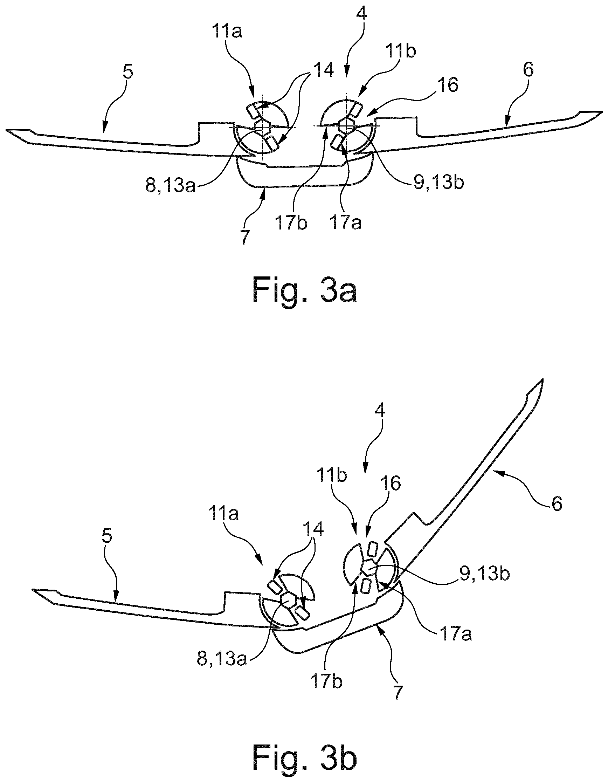

En figure 3a, les ailettes 14 des deux dispositifs de ralentissement 11 a,11 b sont disposées chacune contre une paroi 17a de logement 16 et aptes à se mouvoir librement vers l'autre paroi 17b si l'on actionne en rotation l'entretoise 7 et la plaque arrière 6.

De ce fait, le panneau arrière 3 est apte à commencer son rabattement sans intervention des dispositifs de ralentissement 11 a, 11 b, ce qui permet de libérer rapidement l'accès au compartiment à bagages.

En figure 3b, les ailettes 14 des deux dispositifs de ralentissement 11 a,11 b sont disposées entre deux parois 17a,17b de logement 16 et toujours aptes à se mouvoir librement alors qu'on est en cours de rotation de l'entretoise 7 et de la plaque arrière 6.

Le panneau arrière 3 effectue alors son rabattement sans intervention des dispositifs de ralentissement 11a,11b.

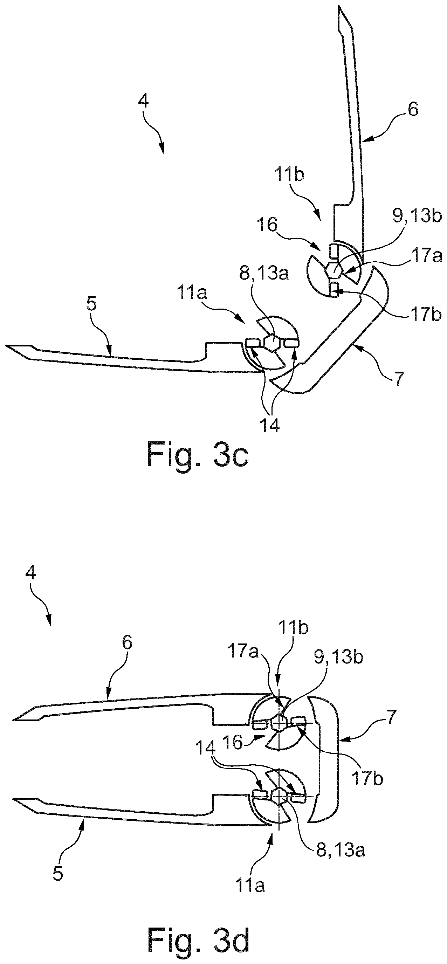

En figure 3c, les ailettes 14 des deux dispositifs de ralentissement 11a,11b viennent chacune en butée contre la paroi 17b de logement 16 opposée à celle 17a contre laquelle elles étaient disposées dans la situation de la figure 3a.

On arrive donc à un stade de rabattement du panneau arrière 3 où les dispositifs de ralentissement 11a,11b vont être activés, les ailettes 14 commençant à être entrainées en rotation, par rapport à l'entretoise 7, par appui des parois 17b réalisant la butée.

En figure 3d, les ailettes 14 ont terminé leur rotation par rapport à l'entretoise 7 après une plage angulaire de rabattement ralenti.

Comme annoncé avant, la vitesse de rabattement est différenciée, en prévoyant une première phase de rabattement rapide, permettant un accès rapide au compartiment à bagages, suivie par une deuxième phase de rabattement ralenti, évitant un claquage du panneau arrière 3 contre le panneau avant 2 en fin de rabattement.

## Revendications

1. Système (1) de recouvrement d'un compartiment à bagages de véhicule automobile, ledit système comprenant :
• un panneau avant (2) destiné à être monté en position horizontale sur des ébénisteries latérales de garnissage dudit compartiment,
• un panneau arrière (3) articulé transversalement par une charnière (4) audit panneau avant, de manière à pouvoir être actionné entre une position de recouvrement où il est dans le prolongement horizontal dudit panneau avant, et une position d'accès audit compartiment, où il est rabattu par le haut d'un demi-tour contre ledit panneau avant,
ladite charnière comprenant :
• une plaque avant (5) solidaire dudit panneau avant,
• une plaque arrière (6) solidaire dudit panneau arrière,
• une entretoise (7) montée entre lesdites plaques, le bord avant - respectivement arrière - de ladite entretoise étant articulé selon un axe transversal avant (8) - respectivement arrière (9) - à ladite plaque avant - respectivement arrière -,
• au moins un moyen ressort (10) actionnant lesdites plaques en rabattement l'une vers à l'autre, de manière à permettre l'actionnement de ladite charnière entre une configuration dépliée, où lesdites plaques et ladite entretoise sont dans le prolongement horizontal les unes des autres, et une configuration repliée où lesdites plaques et ladite entretoise définissent en vue latérale un U couché,
ledit système étant **caractérisé en ce qu'**il comprend en outre deux dispositifs de ralentissement (11a,11b) de la rotation disposés respectivement selon chacun desdits axes transversaux, de manière à ralentir la rotation de ladite entretoise par rapport à ladite plaque avant et la rotation de ladite plaque arrière par rapport à ladite entretoise.

2. Système selon la revendication 1, **caractérisé en ce qu'**un dispositif de ralentissement (11a,11b) est agencé pour réaliser un ralentissement sur seulement une partie de la plage angulaire totale de rotation.

3. Système selon l'une des revendications 1 ou 2, **caractérisé en ce qu'**un dispositif de ralentissement (11a,11b) comprend un stator (12a,12b) et un rotor (13a,13b) entre lesquels est interposée une substance visqueuse de ralentissement de la rotation dudit rotor.

4. Système selon la revendication 3, **caractérisé en ce que** le stator (12a,12b) est monté fixe sur l'entretoise (7), le rotor (13a,13b) étant couplé en rotation avec une plaque (5,6).

5. Système selon la revendication 4, **caractérisé en ce qu'**un rotor (13a,13b) comprend deux ailettes (14) externes radialement opposées, une plaque (5,6) étant pourvue d'un moyen de réception (15) comprenant deux logements (16) respectifs de réception de chacune desdites ailettes, chacun desdits logements étant délimité par deux parois (17a,17b) définissant un secteur angulaire où lesdites ailettes peuvent se mouvoir librement, de manière à ne pas ralentir la rotation, lesdites parois étant positionnées de manière à entrer en contact avec lesdites ailettes à partir d'un angle de rotation donné entre l'entretoise (7) et une plaque (5,6), de manière à réaliser le couplage en rotation entre le rotor (13a,13b) et la plaque (5,6) correspondante et à ralentir la rotation.

6. Système selon la revendication 5, **caractérisé en ce que** le moyen de réception (15) est sous forme d'une pièce emboitée sur la plaque (5,6) de manière à en être solidaire en rotation.

7. Système selon l'une quelconque des revendications 1 à 6, **caractérisé en ce qu'**il comprend en outre un volet arrière (18) articulé transversalement en arrière du panneau arrière (3) de manière à pouvoir se replier contre ledit panneau arrière une fois mis en position de recouvrement.

## Patentansprüche

1. System (1) zur Abdeckung eines Kofferraums eines Kraftfahrzeugs, wobei das besagte System Folgendes umfasst:
- eine vordere Tafel (2), die dazu bestimmt ist, in einer horizontalen Position auf lateralen Holzblenden zur Auskleidung des besagten Raumes montiert zu werden,
- eine hintere Tafel (3), die querlaufend durch ein Scharnier (4) an der besagten vorderen Tafel angelenkt ist, um zwischen einer Abdeckungsposition, in der sie sich in der horizontalen Verlängerung der besagten vorderen Tafel befindet, und einer Zugangsposition zum besagten Raum betätigt werden zu können, in der sie von oben um eine halbe Drehung gegen die besagte vordere Tafel geklappt ist,
wobei das besagte Scharnier Folgendes umfasst:
- eine vordere Platte (5), die fest mit der besagten vorderen Tafel verbunden ist,
- eine hintere Platte (6), die fest mit der besagten hinteren Tafel verbunden ist,
- ein Abstandshalter (7), der zwischen den besagten Platten montiert ist, wobei der vordere, beziehungsweise der hintere Rand des besagten Abstandshalters entlang einer vorderen (8), beziehungsweise hinteren (9) querlaufenden Achse an der besagten vorderen, beziehungsweise hinteren Platte angelenkt ist,
- zumindest ein Federmittel (10), das die besagten Platten betätigt, indem es die eine auf die andere klappt, um die Betätigung des besagten Scharniers zwischen einer auseinandergeklappten Konfiguration, bei der die besagten Platten und der besagte Abstandshalter in der horizontalen Verlängerung zueinander stehen, und einer eingeklappten Konfiguration zu ermöglichen, bei der die besagten Platten und der besagte Abstandshalter in der Seitenansicht ein liegendes U bilden,
wobei das besagte System **dadurch gekennzeichnet ist, dass** es darüber hinaus zwei Verzögerungsvorrichtungen (11a, 11b) für die Rotation umfasst, die jeweils entlang jeder der besagten querlaufenden Achsen angeordnet sind, um die Rotation des besagten Abstandshalters im Verhältnis zur besagten vorderen Platte, und die Rotation der besagten hinteren Platte im Verhältnis zum besagten Abstandshalter zu verzögern.

2. System nach Anspruch 1, **dadurch gekennzeichnet, dass** eine Verzögerungsvorrichtung (11a, 11b) angeordnet ist, um eine Verzögerung auf nur einem Abschnitt des gesamten Rotationswinkelbereichs zu erzeugen.

3. System nach Anspruch 1 oder 2, **dadurch gekennzeichnet, dass** eine Verzögerungsvorrichtung (11a, 11b) einen Stator (12a, 12b) und einen Rotor (13a, 13b) umfasst, zwischen denen eine zähflüssige Substanz zum Verzögern der Rotation des besagten Rotors eingebracht ist.

4. System nach Anspruch 3, **dadurch gekennzeichnet, dass** der Stator (12a, 12b) fest auf dem Abstandshalter (7) montiert ist, wobei der Rotor (13a, 13b) rotierend an einer Platte (5, 6) angekoppelt ist.

5. System nach Anspruch 4, **dadurch gekennzeichnet, dass** ein Rotor (13a, 13b) zwei radial gegenüberliegende externe Flügel (14) umfasst, wobei eine Platte (5, 6) mit einem Aufnahmemittel (15) versehen ist, das zwei jeweilige Aufnahmen (16) zur Aufnahme eines jeden der besagten Flügel umfasst, wobei jede der besagten Aufnahmen durch zwei Wände (17a, 17b) eingegrenzt wird, die einen Winkelsektor definieren, in dem sich die besagten Flügel frei bewegen können, um die Rotation nicht zu verzögern, wobei die besagten Wände positioniert sind, um ab einem gegebenen Rotationswinkel zwischen dem Abstandshalter (7) und einer Platte (5, 6) in Kontakt mit den besagten Flügeln zu treten, um die rotierende Kopplung zwischen dem Rotor (13a, 13b) und der entsprechenden Platte (5, 6) herzustellen und die Rotation zu verzögern.

6. System nach Anspruch 5, **dadurch gekennzeichnet, dass** das Aufnahmemittel (15) in Form eines auf der Platte (5, 6) eingerasteten Teils ausgeführt ist, um sich drehfest damit zu verbinden.

7. System nach einem der Ansprüche 1 bis 6, **dadurch gekennzeichnet, dass** es darüber hinaus eine hintere Klappe (18) umfasst, die querlaufend hinter der hinteren Tafel (3) gelenkig ist, um sich gegen die besagte hintere Tafel falten zu können, sobald diese in die Abdeckungsposition gebracht wird.

## Claims

1. System (1) for covering a luggage compartment of a motor vehicle, said system comprising:
- a front panel (2) intended to be mounted in horizontal position on lateral garnishing woodworking of said compartment,
- a rear panel (3) articulated transversally by a hinge (4) to said front panel, in such a way as to be able to be actuated between a position of collection wherein it is in the horizontal extension of said front panel, and a position of access to said compartment, wherein it is folded back by the top of a half-turn against said front panel,
said hinge comprising:
- a front plate (5) integral with said front panel,
- a rear plate (6) integral with said rear panel,
- a spacer (7) mounted between said plates, with the front edge - respectively rear edge - of said spacer being articulated according to a front transverse axis (8) - respectively rear (9) - to said front - respectively rear - plate,
- at least one spring means (10) actuating said plates by folding one back towards the other, in such a way as to allow for the actuating of said hinge between an unfolded configuration, wherein said plates and said spacer are in the horizontal extension of one another, and a folded back wherein said plates and said spacer defined as a lateral view and a laying U,
with said system being **characterised in that** it further comprises two devices for slowing (11a, 11b) the rotation arranged respectively according to each one of said transverse axes, in such a way as to slow down the rotation of said spacer with respect to said front plate and the rotation of said rear plate with respect to said spacer.

2. System according to claim 1, **characterised in that** a device for slowing down (11a, 11b) is arranged in order to carry out a slowing down over only a portion of the total angular range of rotation.

3. System according to one of claims 1 or 2, **characterised in that** a device for slowing (11a, 11b) comprises a stator (12a, 12b) and a rotor (13a, 13b) between which is inserted a viscous substance for slowing down the rotation of said rotor.

4. System according to claim 3, **characterised in that** the stator (12a, 12b) is mounted fixed on the spacer (7), with the rotor (13a, 13b) being coupled in rotation with a plate (5, 6).

5. System according to claim 4, **characterised in that** a rotor (13a, 13b) comprises two radially-opposite external vanes (14), a plate (5, 6) being provided with a means for receiving (15) comprising two respective housings (16) for receiving each one of said vanes, with each one of said housings being delimited by two walls (17a, 17b) that define an angular sector wherein said vanes can move freely, in such a way as to not slow down the rotation, with said walls being positioned in such a way as to come into contact with said vanes starting from a given angle of rotation between the spacer (7) and a plate (5, 6), in such a way as to carry out the coupling in rotation between the rotor (13a, 13b) and the corresponding plate (5, 6) and to slow down the rotation.

6. System according to claim 5, **characterised in that** the means for receiving (15) is in the form of a stamped part on the plate (5, 6) in such a way as to integral in rotation.

7. System according to any of claims 1 to 6, **characterised in that** it further comprises a rear flap (18) articulated transversally at the rear of the panel (3) in such a way as to be able to fold back against said rear panel once in the covering position.
